# EUROPÄISCHE PATENTSCHRIFT

(11) **EP 3 941 681 B1**
(45) Veröffentlichungstag und Bekanntmachung des Hinweises auf die Patenterteilung: **19.07.2023**
(21) Anmeldenummer: 20714958.4
(22) Anmeldetag: 20.03.2020
(51) Int. Cl.: B25B 11/00, B23Q 3/08, B23Q 1/26

(54) **KONSOLE, SPANNMITTEL UND UNTERDRUCKSPANNEINRICHTUNG**
CONSOLE, CLAMPING MEANS AND VACUUM CLAMPING APPARATUS
CONSOLE, MOYEN DE SERRAGE ET DISPOSITIF DE SERRAGE À VIDE

(30) Priorität: 22.03.2019 DE 102019107477
(43) Veröffentlichungstag der Anmeldung: 26.01.2022
(73) Patentinhaber: J. Schmalz GmbH, 72293 Glatten (DE); HOMAG GmbH, 72296 Schopfloch (DE)
(72) Erfinder: REINISCH, Hermann, 72293 Glatten (DE); GÜNTHER, Martin, 72293 Glatten (DE); RACK, Alexander, 72250 Freudenstadt (DE); MARTINEZ, Jörg, 72280 Dornstetten (DE); TENTRUP, Markus, 33335 Gütersloh (DE); GRINGEL, Martin, 72479 Straßberg (DE)
(74) Vertreter: DREISS Patentanwälte PartG mbB
(86) Internationale Anmeldenummer: PCT/EP2020/057772
(87) Internationale Veröffentlichungsnummer: WO 2020/193405

(56) Entgegenhaltungen:
- DE-A1- 19 613 094
- DE-A1-102010 053 657

## Beschreibung

Die Erfindung betrifft eine Konsole für eine Unterdruckspanneinrichtung mit den Merkmalen des Oberbegriffs von Anspruch 1. Zudem betrifft die Erfindung ein Spannmittel für eine Unterdruckspanneinrichtung zum Spannen von Gegenständen mit den Merkmalen des Oberbegriffs des nebengeordneten Anspruchs. Weiter betrifft die Erfindung eine Unterdruckspanneinrichtung mit mindestens einer solchen Konsole und mindestens einem solchen Spannmittel.

Unterdruckspanneinrichtungen mit einer Konsole und darauf angeordneten Spannmitteln, die auf der Konsole manuell positionierbar sind, sind aus dem Stand der Technik bekannt, bspw. aus DE 196 13 094 A1. Durch Positionierung der Spannmittel ist ein Spannen unterschiedlicher Werkstücke möglich, allerdings erfordert dies einen manuellen Eingriff, bspw. durch einen Werker (Rüstaufwand).

Eine Unterdruckspanneinrichtung, bei der Festhaltemittel durch einen Mitnehmer an einer Trägertraverse positioniert werden können, ist aus DE 10 2010 053 657 A1 bekannt. Die darin beschriebene Lösung ist aufgrund der Vielzahl an Komponenten konstruktiv aufwändig. Eine Reinigungsmöglichkeit ist nicht beschrieben. Im Betrieb kann es zu Beeinträchtigungen durch Verschmutzung der Komponenten durch Werkstückbearbeitung kommen.

Der Erfindung liegt die Aufgabe zugrunde, bei Unterdruckspanneinrichtungen mit einfachen konstruktiven Mitteln eine zuverlässige automatisierte Verlagerung von Spannmitteln zu ermöglichen. Dabei ist wünschenswert, dass auf eine Konsole der Unterdruckspanneinrichtung aufgesetzte Spannmittel ohne manuellen Eingriff durch einen Werker zuverlässig positioniert werden können.

Die Erfindung löst diese Aufgabe durch eine Konsole für eine Unterdruckspanneinrichtung mit den Merkmalen des Anspruchs 1. Die Konsole dient für eine Unterdruckspanneinrichtung mit an einer Konsole verlagerbar angeordneten Spannmitteln. Die Konsole weist einen motorisch angetriebenen Mitnehmer zur Verlagerung eines auf die Konsole (Konsolenoberseite) aufsetzbaren oder aufgesetzten Spannmittels auf. Der Mitnehmer ist vorzugsweise an einer (an die Konsolenoberseite angrenzenden) Seitenwand der Konsole angeordnet und daran entlang der Konsolenlängsrichtung verschieblich geführt.

Die Konsole zeichnet sich dadurch aus, dass der Mitnehmer mindestens einen ausfahrbaren Mitnehmerzapfen zur mechanischen Ankopplung eines Spannmittels an den Mitnehmer und eine Fluidzuführung zur Beaufschlagung eines an den Mitnehmer angekoppelten Spannmittels mit einem insbesondere unter Druck (Überdruck oder Unterdruck) stehenden Fluid aufweist.

Der Mitnehmerzapfen ist vorzugsweise derart eingerichtet, um insbesondere in der ausgefahrenen Stellung in eine mit dem Mitnehmerzapfen korrespondierende Ausnehmung eines auf die Konsole (Konsolenoberseite) aufgesetzten Spannmittels einzugreifen. Die Ausnehmung kann in einem Basisabschnitt des Spannmittels ausgebildet sein.

Es ist eine selbstrüstende Konsole geschaffen, bei der ein Spannmittel im an den Mitnehmer angekoppelten Zustand mit einem Fluid (bspw. Druckluft) versorgt werden kann. Somit lassen sich Zusatzfunktionen realisieren, bspw. ein Reinigen der Konsolenoberfläche durch gezieltes Abblasen vor oder während der Verlagerung des Spannmittels. Dadurch lassen sich Verschleiß und Druckluftverbrauch reduzieren.

Die Konsole kann an einer Seitenwand einen (konsolenseitigen) Führungsabschnitt aufweisen, der mit einem (mitnehmerseitigen) Führungsabschnitt des Mitnehmers korrespondiert. Bei der gebildeten Führung kann es sich um eine Gleitführung handeln. Der konsolenseitige Führungsabschnitt kann als separater Führungsabschnitt ausgebildet sein, der an der Konsole (Seitenwand) befestigt, bspw. angeschraubt, wird. Alternativ kann der konsolenseitige Führungsabschnitt einstückig mit der Konsole ausgebildet sein (einstückiges Strangpressprofil).

Die Fluidzuführung kann durch einen dezentralen Druckerzeuger mit einem unter Druck stehenden Fluid (bspw. Druckluft) gespeist werden, wobei die Fluidzuführung zum Mitnehmer durch eine bspw. in der Konsole (Kanal) geführte Fluidleitung (Kabelschlepp) gebildet sein kann. Alternativ kann ein lokal im Mitnehmer angeordneter Drucklufterzeuger vorgesehen sein.

Der Mitnehmerzapfen ist zwischen einer eingefahrenen Stellung (ungekoppelter Zustand) und einer ausgefahrenen Stellung (gekoppelter Zustand) verlagerbar. Der Mitnehmerzapfen verlagert sich dabei insbesondere entlang seiner Mittellängsrichtung (Mittellängsachse). Die Mittellängsachse ist insbesondere derart angeordnet, dass diese die Ebene, in der die Konsolenoberfläche liegt, unter einem Winkel schneidet, insbesondere orthogonal. Der Mitnehmerzapfen ist in einem korrespondierenden Kanal im Mitnehmer geführt. Der Mitnehmerzapfen kann rotationssymmetrisch ausgebildet sein. Der Kanal für den Mitnehmerzapfen kann einen kreisrunden Querschnitt aufweisen.

In der eingefahrenen Stellung kann der Mitnehmerzapfen insbesondere vollständig im Mitnehmer versenkt sein. Dadurch können Verschmutzungen des Mitnehmerzapfens gering gehalten werden.

Der Antrieb des Mitnehmerzapfens kann pneumatisch erfolgen, bspw. mittels der Fluidzuführung. Durch Beaufschlagung mit Druck (bspw. Druckluft) kann der Mitnehmerzapfen von der eingefahrenen Stellung in die ausgefahrene Stellung gebracht werden. Optional kann ein Abblasen des Mitnehmerzapfens erfolgen (Reinigung), wozu der Mitnehmerzapfen am freien Ende eine Mündung aufweisen kann. Am Mitnehmer kann eine Federrückstellung angeordnet sein, bspw. eine Zugfeder, die den Mitnehmerzapfen bei Belüften in die eingefahrene Stellung rückstellt. Die Federrückstellung wirkt zwischen Mitnehmer (Mitnehmergehäuse) und Mitnehmerzapfen. Der Antrieb kann optional auch fluidisch, motorisch, elektrisch oder magnetisch erfolgen.

Die Konsole kann ansonsten entsprechend der in DE 196 13 094 A1 beschriebenen Konsole (Spannbalken) ausgebildet sein, wobei auf die dortige Offenbarung Bezug genommen wird. Demnach kann die Konsole eine oder mehrere Versorgungsleitungen und Öffnungen an der Konsolenoberfläche (Spannfläche) aufweisen, in denen jeweils ein Ventil sitzt. An einer Seitenwand kann ein (konsolenseitiger) Führungsabschnitt für den Mitnehmer ausgebildet sein, wie oben beschrieben.

Die Konsole und/oder das Spannmittel können pneumatisch betrieben sein. Als Fluid kann ein Gas, bspw. unter Druck (Unterdruck oder Überdruck) stehende Luft eingesetzt werden (Unterdruck).

Zum Antrieb des Mitnehmers kann ein Mitnehmerantrieb vorgesehen sein, bspw. in Form eines in der Konsole angeordneten, bspw. umlaufenden, Riementriebs. Der Antriebsriemen kann über zwei oder mehrere Rollen geführt sein, von denen eine Rolle motorisch angetrieben ist, bspw. durch einen Elektromotor. Der Mitnehmer kann mit dem Antriebsriemen gekoppelt, bspw. verschraubt, sein. Der Antrieb kann optional auch fluidisch, motorisch, elektrisch oder magnetisch erfolgen.

Optional können am Mitnehmer zwei ausfahrbare Mitnehmerzapfen ausgebildet sein. Dadurch wird eine stabile und sichere Kopplung erzielt, wobei ein Verkanten des Spannmittels vermieden werden kann. Die Mitnehmerzapfen sind insbesondere an zwei in Konsolenlängsrichtung entgegengesetzten Enden des Mitnehmers angeordnet.

Im Rahmen einer bevorzugten Ausgestaltung kann die Fluidzuführung zumindest teilweise in den Mitnehmerzapfen integriert sein. Dadurch kann eine Ankopplung eines Spannmittels an den Mitnehmer und eine Fluidübertragung an das Spannmittel mittels lediglich einer Komponente erfolgen. Somit ist nur eine Schnittstelle (bei zwei Mitnehmerzapfen zwei Schnittstellen) zwischen Mitnehmer und Spannmittel gegeben. Im Mitnehmerzapfen kann ein Strömungskanal ausgebildet sein, der an einer Mündung am freien Ende des Mitnehmerzapfens endet.

Die Fluidzuführung vom Mitnehmer auf den Mitnehmerzapfen kann über den Kanal erfolgen, in dem der Mitnehmerzapfen geführt wird. Das kanalseitige Ende des Mitnehmerzapfens kann einen Kolbenabschnitt aufweisen. Bei Beaufschlagung des Kanals mit einem Fluid kann der Mitnehmerzapfen in die ausgefahrene Stellung überführt werden (Druck wirkt auf den Kolbenabschnitt).

In vorteilhafter Weise kann der Mitnehmerzapfen an seinem freien Ende eine Expansionsdichtung aufweisen. Die Expansionsdichtung kann, insbesondere in der ausgefahrenen Stellung des Mitnehmerzapfens, von einem unexpandierten Zustand in einen (radial) expandierten Zustand verbracht werden. Im expandierten Zustand kann eine formschlüssige und dichte Verbindung zwischen dem Mitnehmerzapfen und der mit dem Mitnehmerzapfen korrespondierenden Ausnehmung des Spannmittels hergestellt werden.

Die Expansionsdichtung kann als expandierbare Manschette, insbesondere als expandierbare Gummimanschette, ausgebildet sein. Die Manschette kann eine Wandung aufweisen, die einen Manschetteninnenraum begrenzt, wobei der Innenraum mit einer Fluidzuführung strömungsverbunden ist, so dass die Manschette bspw. durch Beaufschlagen mit Druckluft in den expandierten Zustand verbracht werden kann. Der Manschetteninnenraum kann optional mit der Fluidzuführung des Mitnehmerstößels (Strömungskanal) strömungsverbunden sein. Alternativ zu einer Fluidbeaufschlagung können zwei Klemmkörper an die Manschette angrenzen, die, bspw. mittels eines Aktuators, relativ zueinander verlagerbar sind, so dass die Manschette (radial) expandiert wird.

Der Mitnehmerzapfen ist insbesondere derart dimensioniert, dass die Außenabmessungen des Mitnehmerzapfens (Außendurchmesser) etwas kleiner sind als die Innenabmessungen (Innendurchmesser) der korrespondierenden Ausnehmung des Spannmittels, bspw. um 0,2 bis 6 mm (Millimeter) kleiner. Dadurch kann der Mitnehmerzapfen möglichst reibungsfrei in die korrespondierende Öffnung des Spannmittels eingeführt werden. Der verbleibende (radiale) Spalt zwischen Mitnehmerzapfen und korrespondierender Ausnehmung wird durch die Expansionsdichtung überbrückt, wenn sich diese in den expandierten Zustand verbracht ist. Die Expansionsdichtung legt sich dann an der Innenwand (bspw. Innenumfang) der Ausnehmung an.

Die Expansionsdichtung kann derart ausgebildet sein, um einen vorzugsweise radialen Spalt von 0,2 mm bis 6 mm (Millimeter) zu überbrücken. Hiermit kann eine hinreichende Abdichtung zur Innenwand der mit dem Mitnehmerzapfen korrespondierenden Ausnehmung des Spannmittels erreicht werden.

In vorteilhafter Weise kann der Mitnehmer einen Magnetsensor (magnetoresistiver Sensor) aufweisen. Dieser kann, bspw. durch eine im Spannmittel angeordnete ferromagnetische Einlage (bspw. Stahlstift), eine Anwesenheit des Spannmittels detektieren und/oder eine definierte Ausrichtung des Spannmittels relativ zum Mitnehmer erfassen. Dies erleichtert ein automatisches Auffinden und Ausrichten von Spannmitteln relativ zum Mitnehmer.

Die eingangs genannte Aufgabe wird auch durch ein Spannmittel für eine Unterdruckspanneinrichtung zum Spannen von Gegenständen (Werkstücken) mit den Merkmalen des nebengeordneten Anspruchs gelöst. Das Spannmittel weist einen Basisabschnitt (Konsolenauflageabschnitt) auf, über dessen Unterseite das Spannmittel auf eine Konsole einer Unterdruckspannvorrichtung aufgesetzt und verschoben werden kann.

Das Spannmittel zeichnet sich dadurch aus, dass am Basisabschnitt mindestens eine, insbesondere zur Unterseite hin offene, Ausnehmung zur Kopplung mit einem mit der Ausnehmung korrespondierenden Mitnehmerzapfen eines Mitnehmers einer Konsole für eine Unterdruckspanneinrichtung ausgebildet ist. Die Ausnehmung kann optional in einem am Basisabschnitt abragenden Vorsprung angeordnet sein. Dies trägt zu einer konstruktiv einfachen und stabilen Ankopplung des Spannmittels an den Mitnehmer bei.

Der abragende Vorsprung und dessen Ausnehmung sind insbesondere derart ausgebildet, dass ein mit der Ausnehmung korrespondierender Mitnehmerzapfen in der ausgefahrenen Stellung mit der Ausnehmung eingreifen kann. Der (seitlich) abragende Vorsprung ist vorzugweise derart ausgebildet, dass dieser dann, wenn das Spannmittel auf die Konsole aufgesetzt ist (in seiner Projektion bzw. bei Draufsicht "von oben") seitlich über die Konsole hinausragt.

Im Rahmen einer bevorzugten Ausgestaltung kann die Ausnehmung mit mindestens einer Abblasöffnung strömungsverbunden sein, die an einer in Verschieberichtung des Spannmittels orientierten Stirnseite des Spannmittels angeordnet ist. Durch gezieltes stirnseitiges Abblasen kann die Konsolenoberfläche gereinigt werden. Durch Beaufschlagen der Ausnehmung mit einem Fluid (bspw. Druckluft), bspw. mittels der Fluidzuführung des Mitnehmerstößels, strömt das Fluid durch die Abblasöffnung und bläst dort Bearbeitungsrückstände, bspw. Sägespäne, weg. Eine gute Reinigungswirkung bei vergleichsweise geringem Luftverbrauch kann erreicht werden.

An der Abblasöffnung kann die Hauptströmungsrichtung einen spitzen Winkel, bspw. weniger als 45°, mit der Unterseite des Spannmittels einschließen. An der Abblasöffnung können eine oder mehrere Blasdüsen angeordnet sein. Die Abblasöffnung kann in eine sich zumindest abschnittsweise über die Stirnseite erstreckende Quernut münden. Dadurch kann eine vergleichsweise breite Fluidströmung erreicht werden. Die Strömungsverbindung zwischen Ausnehmung und Abblasöffnung kann durch einen im Spannmittel, insbesondere im Basisabschnitt, ausgebildeten Strömungskanal realisiert sein.

In vorteilhafter Weise kann die Ausnehmung mit mindestens einem Auslass strömungsverbunden sein, der an der Unterseite des Basisabschnitts angeordnet ist und in einen (kammerartigen) Abschnitt mündet, der (seitlich) durch an der Unterseite angeordnete Dichtungen begrenzt ist. Bei Beaufschlagen der Ausnehmung mit einem Fluid (bspw. Druckluft) ergibt sich in dem Abschnitt eine Überdruckzone. Ist das Spannmittel auf die Konsole aufgesetzt, ergibt sich in dem Abschnitt eine Art "Luftkissen". Dies verringert Schmutzeintrag unter das Spannmittel und reduziert die zum Verlagern des Spannmittels erforderliche Verschiebekraft. Der Auslass kann vom bereits beschriebenen Strömungskanal im Spannmittel abzweigen.

Das Spannmittel kann eine oder mehrere solcher (kammerartigen) Abschnitte aufweisen. Die Dichtungen können als gleitende Dichtungen ausgebildet sein, die einen abgerundeten (konvexen) Auflageabschnitt aufweisen.

Im Rahmen einer bevorzugten Ausgestaltung kann der Basisabschnitt eine ferromagnetische Einlage aufweisen. Dies begünstigt ein Auffinden eines Spannmittels oder ein Ausrichten des Spannmittels relativ zum Mitnehmer mittels des Magnetsensors des Mitnehmers. Die ferromagnetische Einlage kann bspw. als Stahlstift ausgebildet sein.

In vorteilhafter Weise kann das Spannmittel als Blocksauger oder als Vertikalspanner mit einem Spannzylinder ausgebildet sein. Ein Blocksauger kann an einer vom Basisabschnitt gegenüberliegenden Seite (Oberseite) einen Saugraum aufweisen, der einem zu spannenden Gegenstand zugewandt ist. Abgesehen von den voranstehend beschriebenen Merkmalen kann der Blocksauger wie in DE 196 13 094 A1 ausgebildet sein. Der Vertikalspanner kann derart ausgebildet sein, dass, wenn der Vertikalspanner mittels des Mitnehmerzapfens (Ausnehmung) an den Mitnehmer angekoppelt ist, der Zylinder des Vertikalspanners mittels der Fluidzuführung des Mitnehmerzapfens betätigt werden kann.

Im Rahmen einer bevorzugten Ausgestaltung kann bei einem als Vertikalspanner ausgebildeten Spannmittel die Ausnehmung im Basisabschnitt mit der Fluidversorgung des Spannzylinders strömungsverbunden sein. Dadurch kann die Fluidversorgung des Spannzylinders über den Mitnehmerzapfen eines mit dem Spannmittel gekoppelten Mitnehmers erfolgen.

Die eingangs genannte Aufgabe wird auch durch eine Unterdruckspanneinrichtung zum Spannen von Gegenständen (Werkstücken) gelöst. Die Unterdruckspanneinrichtung weist mindestens eine Konsole wie oben beschrieben und mindestens ein Spannmittel wie oben beschrieben auf. Das Spannmittel kann auf die Konsole aufgesetzt und entlang der Konsole verlagerbar sein. Bei der Unterdruckspanneinrichtung kann es sich bspw. um einen mit Unterdruck betriebenen Spanntisch für eine CNC-Holzbearbeitungsmaschine handeln. Hinsichtlich der erzielbaren Vorteile sei auf die obigen Ausführungen verwiesen.

Die Erfindung wird im Folgenden anhand der Figuren näher erläutert, wobei gleiche oder funktional gleiche Elemente mit identischen Bezugszeichen versehen sind, ggf. jedoch lediglich einmal. Es zeigen:
- Fig.1: eine Ausführungsform einer Unterdruckspanneinrichtung mit einer Konsole mit einem Mitnehmer und einem Spannmittel in einer perspektivischen Ansicht;

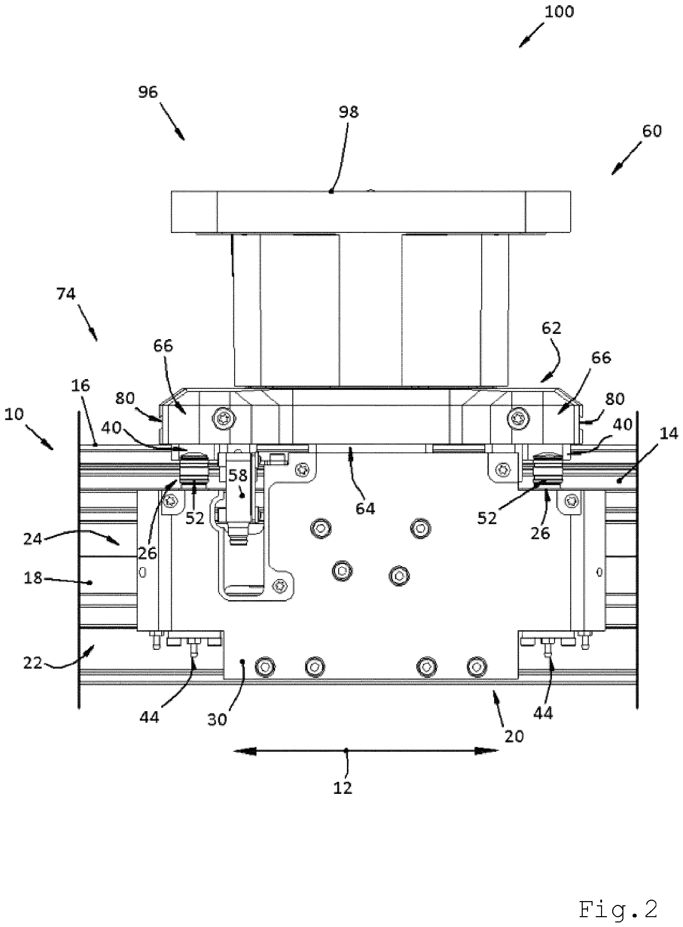

- Fig.2: die Unterdruckspanneinrichtung aus Figur 1 in einer Seitenansicht;
- Fig.3: die Unterdruckspanneinrichtung aus Figur 1 in einer teilweise geschnittenen Seitenansicht, wobei Mitnehmer und Spannmittel voneinander entkoppelt sind;
- Fig.4: die Unterdruckspanneinrichtung aus Figur 1 in einer teilweise geschnittenen Seitenansicht, wobei das Spannmittel an den Mitnehmer angekoppelt ist; und
- Fig.5: in einem abgeknickten Teilschnitt gemäß Schnitt A-A in Figur 1 einen Mitnehmerzapfen, einen Konsolenabschnitt und einen Abschnitt des Spannmittel.

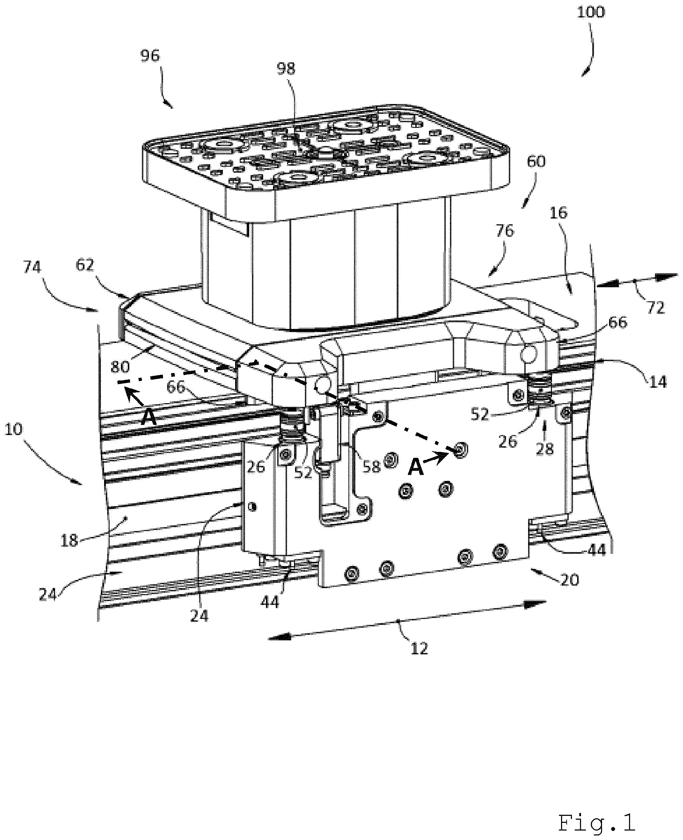

Figur 1 zeigt eine Unterdruckspanneinrichtung zum Spannen von Gegenständen (bspw. Werkstücken), die mit dem Bezugszeichen 100 bezeichnet ist. Die Unterdruckspanneinrichtung 100 weist mindestens eine Konsole 10 und mindestens ein Spannmittel 60 auf. Bei der Unterdruckspannvorrichtung 100 kann es sich bspw. um einen Spanntisch für eine Holzbearbeitungsmaschine handeln.

Die Konsole 10 weist ein sich entlang einer Konsolenlängsrichtung 12 erstreckendes Gehäuse 14 auf, welches bspw. als Strangpressprofil ausgebildet ist. Die Konsole 10 weist u.a. eine Konsolenoberseite 16 (Spannseite 16) auf, auf die Spannmittel 60 aufgesetzt und positioniert werden können. Zudem weist die Konsole 10 eine an die Konsolenoberseite 60 angrenzende Seitenwand 18 auf. Des Weiteren kann die Konsole 10 eine oder mehrere Versorgungsleitungen und mehrere Ventile aufweisen, wie oben beschrieben (nicht dargestellt).

Die Konsole 10 weist weiter einen motorisch angetriebenen Mitnehmer 20 zur Verlagerung eines auf der Konsole 10 (Konsolenoberseite 16) aufgesetzten Spannmittels 60 auf. Der Mitnehmer 20 ist an der Seitenwand 18 der Konsole angeordnet und entlang der Konsolenlängsrichtung 12 verschieblich geführt. An der Seitenwand 18 ist ein konsolenseitiger Führungsabschnitt 22 ausgebildet, der mit einem am Mitnehmer 20 ausgebildeten (mitnehmerseitigen) Führungsabschnitt 24 korrespondiert (Gleitführung). Der Mitnehmer 20 kann mittels eines Mitnehmerantriebs, bspw. einem umlaufenden Riementrieb, entlang der Konsolenlängsrichtung der Konsole 10 verfahren werden (Mitnehmerantrieb nicht dargestellt).

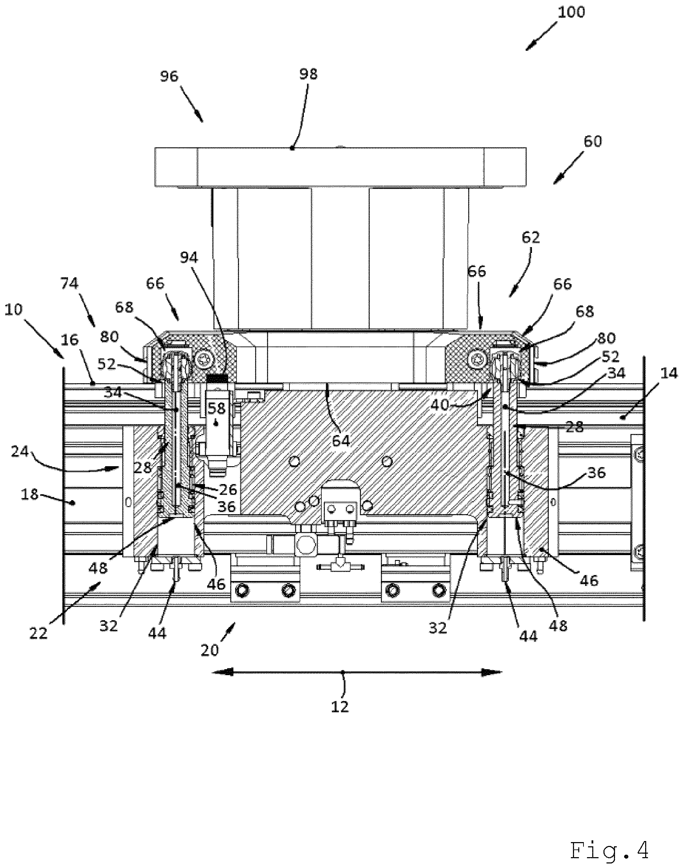

Der Mitnehmer 20 weist zumindest einen, im vorliegenden Ausführungsbeispiel zwei ausfahrbare Mitnehmerzapfen 26 zur mechanischen Ankopplung des Spannmittels 60 an den Mitnehmer 20 auf. Die Mitnehmerzapfen 26 können im ausgefahrenen Zustand jeweils in eine Ausnehmung 68 des Spannmittels 60 eingreifen (vgl. Figur 4). Zudem ist eine Fluidzuführung 28 zur Beaufschlagung des angekoppelten Spannmittels 60 mittels einem unter Druck stehenden Fluid, bspw. Druckluft, vorgesehen.

Der Mitnehmerzapfen 26 ist in einem im Mitnehmergehäuse 30 ausgebildeten Kanal 32 (Zapfenkanal 32) verschieblich geführt.

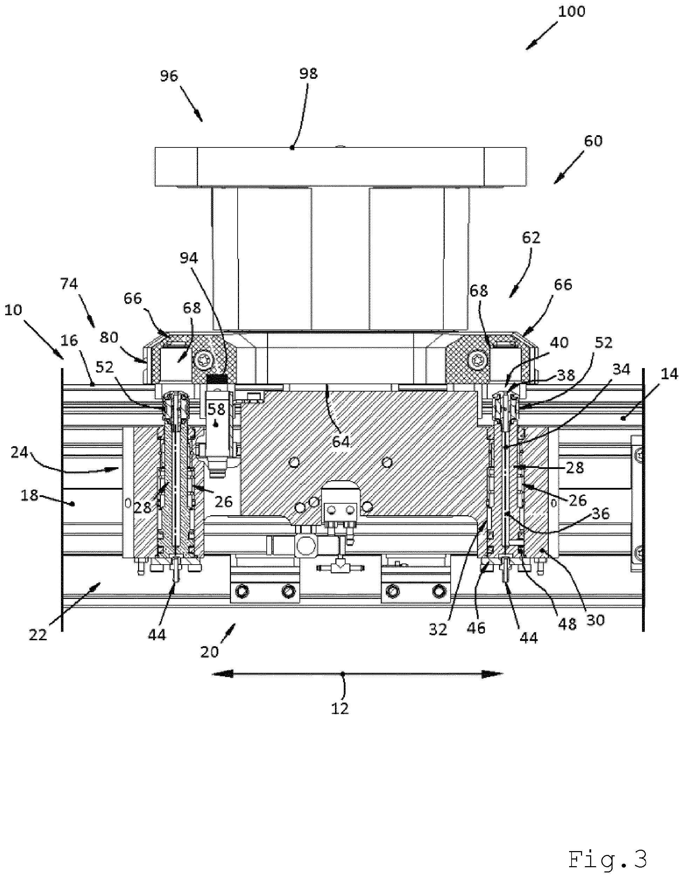

Der Mitnehmerzapfen ist zwischen einer eingefahrenen Stellung (vgl. Figur 3) und einer ausgefahrenen Stellung (vgl. Figur 4) verlagerbar. Die Verlagerung erfolgt entlang der Mittellängsachse 34 des Mitnehmerzapfens 26, wobei die Mittellängsachse 34 insbesondere orthogonal zur Konsolenoberseite 16 orientiert ist. Der Mitnehmerzapfen 26 kann eine kreiszylindrische Gestalt aufweisen. Der Kanal 32 kann einen kreisrunden Querschnitt aufweisen.

Die Fluidzuführung 28 ist in den Mitnehmerzapfen 26 integriert. So weist der Mitnehmerzapfen 26 einen zentrischen Strömungskanal 36 auf, der sich entlang der Mittellängsachse 34 des Mitnehmerzapfens 26 erstreckt und zu einer Mündung 38 am freien Ende 40 des Mitnehmerzapfens 26 führt. Eine Zuführung von Fluid, bspw. Druckluft, erfolgt über einen Anschluss 44 am Kanal 32 für den Mitnehmerzapfen 26. Ein dezentraler Druckerzeuger kann über eine Fluidleitung an den Anschluss 44 angeschlossen sein (nicht dargestellt).

Am (vom freien Ende 40 abgewandten) unteren Ende 46 weist der Mitnehmerzapfen 26 einen Kolbenabschnitt 48 auf. Wird der Kanal 32 für den Mitnehmerzapfen 26 über den Anschluss 44 mit Druck (Druckluft) beaufschlagt, wirkt dieser Druck auf den Kolbenabschnitt 48, so dass der Mitnehmerzapfen 26 in die ausgefahrene Stellung verlagert wird oder in dieser verbleibt (vgl. Figur 4). Der Mitnehmer 20 weist eine Federrückstellung, auf (nicht dargestellt), bspw. mittels einer Zugfeder, die den Mitnehmerzapfen 26 bei Belüften des Kanals 32 in die eingefahrene Stellung (vgl. Figur 3) rückführt.

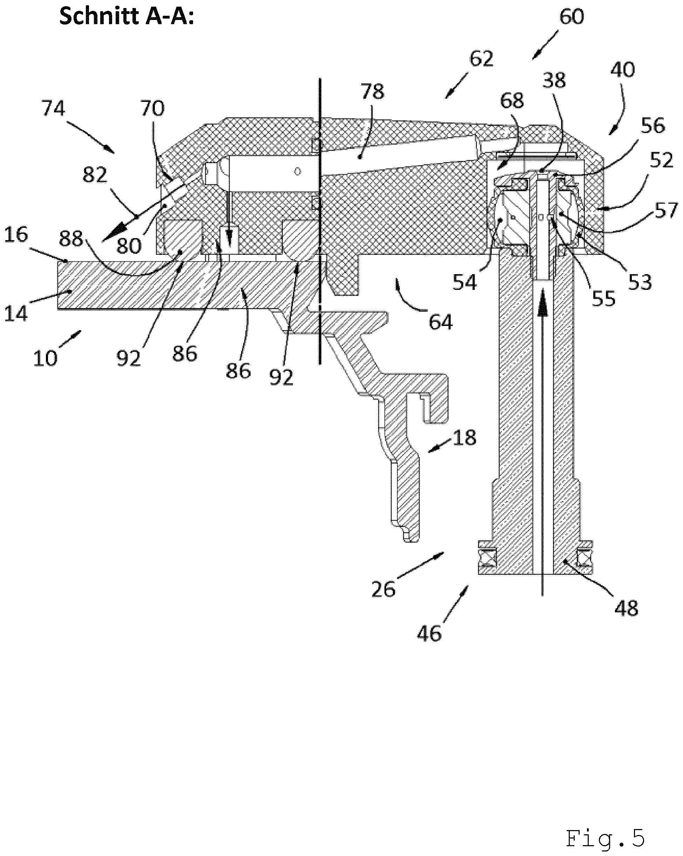

Der Mitnehmerzapfen 26 weist an seinem freien Ende 40 eine Expansionsdichtung 52 auf. Die Expansionsdichtung 52 kann, insbesondere in der ausgefahrenen Stellung des Mitnehmerzapfens 26 von einem unexpandierten Zustand (vgl. Figur 3) in einen (radial) expandierten Zustand verbracht werden (vgl. Figur 4 oder 5). Die Expansionsdichtung 52 kann dann an der Innenwand der mit dem Mitnehmerzapfen 26 korrespondierenden Ausnehmung 68 anliegen, so dass sich eine formschlüssige und dichte Verbindung ergibt.

Die Expansionsdichtung 52 ist als expandierbare Manschette oder Gummimanschette 52 ausgebildet. Die Manschette 52 weist eine Wandung 53 auf, die einen Manschetteninnenraum 54 begrenzt. Der Manschetteninnenraum 54 ist über einen Stichkanal 55 mit der Fluidzuführung 28 bzw. mit dem Strömungskanal 36 strömungsverbunden. Wird der Strömungskanal 36 bspw. mit Druckluft beaufschlagt und steigt der Druck über einen gewissen Schwellwert an, expandiert sich die Manschette 52. Die Manschette 52 kann über ein vorzugsweise anschraubbares Halteelement 56 am freien Ende 40 des Mitnehmerstößels 26 befestigt sein. In der Manschette 52 kann eine innere Distanzhülse 57 vorgesehen sein (axialer Abstandshalter). Der Mitnehmerzapfen 26 bzw. die Expansionsdichtung ist relativ zur Ausnehmung 68 des Spannmittels 60 dimensioniert wie oben beschrieben.

Der Mitnehmer 20 weist zudem einen Magnetsensor 58 (magnetoresistiver Sensor 58) auf. Der Magnetsensor 58 ist eingerichtet, um die Anwesenheit einer im Spannmittel 60 angeordneten ferromagnetischen Einlage 94 (Stahlstift 94) zu detektieren. Hiermit können eine Anwesenheitsdetektion und/oder eine Ausrichtung des Mitnehmers 20 relativ zu einem Spannmittel 60 erfolgen.

An der Konsole 10 kann eine Ventileinheit angeordnet sein, die in der Fluidzuführung zwischen den dezentralen Unterdruckerzeuger und pneumatische Komponenten der Konsole 10 bzw. des Mitnehmers 20 geschaltet ist (nicht dargestellt). Die Ventileinheit kann angesteuert werden, wobei je nach Ansteuerung pneumatische Komponenten der Konsole 10 mit Druck beaufschlagt oder belüftet werden. Die Konsole 10 kann eine interne oder externe Steuerung aufweisen, mit der die elektrisch/elektronisch ansteuerbaren Komponenten der Konsole 10 zusammenwirken und von der Steuerung gesteuert werden, bspw. der Magnetsensor 58, der Mitnehmerantrieb und/oder die Ventileinheit.

Das Spannmittel 60 dient zum Spannen von Gegenständen (Werkstücken) mittels Druck (Unterdruck oder Überdruck). Das Spannmittel 60 ist beispielhaft als Blocksauger 60 ausgebildet, es kann sich hierbei jedoch auch um einen Vertikalspanner handeln, wie oben beschrieben.

Das Spannmittel 60 weist einen Basisabschnitt 62 auf, über dessen Unterseite 64 das Spannmittel 60 auf die Konsole 10 aufgesetzt und darauf positioniert, bspw. verschoben werden kann (vgl. Figur 1). Am Basisabschnitt 62 sind mindestens ein, im vorliegenden Ausführungsbeispiel zwei seitlich abragende Vorsprünge 66 ausgebildet, die eine zur Unterseite 64 hin offene Ausnehmung 68 zur Kopplung mit dem Mitnehmerzapfen 26 des Mitnehmers 20 der Konsole 10 aufweisen.

Die Vorsprünge 66 sind derart ausgebildet, dass diese bei auf die Konsole 10 aufgesetztem Spannmittel 60 seitlich über die Konsole 10 hinausragen. Die Ausnehmungen 68 sind derart ausgerichtet und dimensioniert, dass die Mitnehmerzapfen 26 des Mitnehmers 20 im ausgefahrenen Zustand in die Ausnehmungen 68 eingreifen können (formschlüssige Verbindung).

Die Ausnehmungen 68 können jeweils mit einer Abblasöffnung 70 strömungsverbunden sein, die jeweils an einer in Verschieberichtung 72 des Spannmittels orientierten Stirnseite 74, 76 angeordnet sind. Die Strömungsverbindung zwischen Ausnehmung 68 und Abblasöffnung 70 ist durch einen im Basisabschnitt 62 ausgebildeten Strömungskanal 78 realisiert (vgl. Figur 5). Die Abblasöffnung 70 mündet in eine sich abschnittsweise über die Stirnseite 74, 76 erstreckende Quernut 80. Die Hauptströmungsrichtung 82 an der Abblasöffnung 70 bzw. an der Quernut 80 schließt mit der Unterseite 64 des Spannmittels 60 einen spitzen Winkel ein, bspw. weniger als 45°. Wird die Ausnehmung 68 bspw. mit Druckluft beaufschlagt, strömt diese durch den Strömungskanal 78 zur Abblasöffnung 70 und zur Quernut 80. Dort ergibt sich ein breiter Luftstrom, der stirnseitig Bearbeitungsrückstände (bspw. Sägespäne) auf der Konsolenoberseite 16 wegbläst. Dies erlaubt ein gezieltes Abblasen mittels des Spannmittels 60.

Die Ausnehmung 68 kann mit mindestens einem Auslass 84 strömungsverbunden sein, der an der Unterseite 64 des Basisabschnitts 62 angeordnet ist und in einen (kammerartigen) Abschnitt 86 mündet, der seitlich durch an der Unterseite 64 angeordnete Dichtungen 88, 90 begrenzt ist. Der Auslass 84 zweigt von dem Strömungskanal 78 ab. Die Dichtungen 88, 90 sind als gleitende Dichtungen mit einem abgerundeten (konvexen) Auflageabschnitt 92 ausgebildet. Wird die Ausnehmung 68 bspw. mit Druckluft beaufschlagt, strömt diese durch den Strömungskanal 78 zum Auslass 84, wobei sich in dem Abschnitt 86 eine Überdruckzone ergibt. Ist das Spannmittel auf die Konsole aufgesetzt, bildet sich in dem Abschnitt 86 eine Art "Luftkissen". Dies verringert Schmutzeintrag unter das Spannmittel 60 und reduziert die zum Verlagern des Spannmittels 60 erforderliche Verschiebekraft.

Das Spannmittel 60 weist eine ferromagnetische Einlage 94 auf, die bspw. als Stahlstift 94 ausgebildet sein kann. Die Einlage 94 ist insbesondere angrenzend an die Unterseite 64 des Basisabschnitts 62 angeordnet. Durch die Einlage 94 kann der Mitnehmer 20 mittels des Magnetsensors 58 das Spannmittel 60 auffinden bzw. den Mitnehmer 20 relativ zum Spannmittel positionieren.

Wie oben bereits angedeutet, ist das Spannmittel 60 beispielhaft als Blocksauger 60 angeordnet. An der der Unterseite 64 gegenüberliegenden Oberseite 96 weist der Blocksauger 60 einen dem zu spannenden Gegenstand zugewandten Saugraum 98 auf (werkstückseitiger Saugraum 98). Abgesehen von den voranstehend beschriebenen Merkmalen kann der Blocksauger 60 entsprechend dem in DE 196 13 094 A1 beschriebenen Blocksauger ausgebildet sein, worauf hiermit explizit Bezug genommen wird.

Mit der voranstehend beschriebenen Unterdruckspanneinrichtung 100 bzw. deren Komponenten ist eine selbstrüstende Spanneinrichtung, bspw. ein mit Unterdruck betriebener Spanntisch (Aufspanntisch) für eine CNC-Holzbearbeitungsmaschine geschaffen.

Die mit einem Mitnehmer ausgestattete Konsole erlaubt ein Ankoppeln von Spannmitteln durch den Mitnehmerzapfen. Durch ein unter den Spannmitteln erzeugtes Luftkissen wird die Reibung beim Positionieren bzw. Verschieben der Spannmittel reduziert. Durch die im Spannmittel integrierten Abblasöffnungen kann die Konsole (Konsolenoberseite) vor und während der Positionierung der Spannmittel gereinigt werden. Dadurch lässt sich eine gute Reinigungswirkung erzielen, wobei eine vergleichsweise geringer Luftverbrauch und Verschleiß erreichbar sind.

## Patentansprüche

1. Konsole (10) für eine Unterdruckspanneinrichtung (100), wobei die Konsole (10) einen angetriebenen Mitnehmer (20) zur Verlagerung eines auf die Konsole (10) aufsetzbaren Spannmittels (60) aufweist, wobei der Mitnehmer (20) an einer Seitenwand (18) der Konsole (10) angeordnet und entlang der Konsolenlängsrichtung (12) verschieblich geführt ist, wobei der Mitnehmer (20) mindestens einen ausfahrbaren Mitnehmerzapfen (26) zur mechanischen Ankopplung eines Spannmittels (60) an den Mitnehmer (20) aufweist, **dadurch gekennzeichnet, dass** der Mitnehmer (20) eine Fluidzuführung (28) zur Beaufschlagung eines an den Mitnehmer (20) angekoppelten Spannmittels (60) mit einem insbesondere unter Druck stehenden Fluid aufweist, wobei die Fluidzuführung (28) in den Mitnehmerzapfen (26) integriert ist.

2. Konsole (10) nach Anspruch 1, **dadurch gekennzeichnet, dass** der Mitnehmerzapfen (26) an seinem freien Ende (40) eine Expansionsdichtung (52) aufweist.

3. Konsole (10) nach Anspruch 2, **dadurch gekennzeichnet, dass** die Expansionsdichtung (52) derart ausgebildet ist, um einen vorzugsweise radialen Spalt von 0,2 mm bis 6 mm zu überbrücken.

4. Konsole (10) nach einem der voranstehenden Ansprüche, **dadurch gekennzeichnet, dass** der Mitnehmer (20) einen Magnetsensor (58) aufweist.

5. Spannmittel (60) für eine Konsole (10) gemäß einem der Ansprüche 1 - 4 für eine Unterdruckspanneinrichtung (100) zum Spannen von Gegenständen mittels Druck, wobei das Spannmittel (60) einen Basisabschnitt (62) aufweist, über dessen Unterseite (64) das Spannmittel (60) auf eine Konsole (10) einer Unterdruckspannvorrichtung (100) aufgesetzt und verschoben werden kann, wobei am Basisabschnitt (62) mindestens eine Ausnehmung (68) zur Kopplung mit einem Mitnehmerzapfen (26) eines Mitnehmers (20) einer Konsole (10) für eine Unterdruckspanneinrichtung (100) ausgebildet ist, **dadurch gekennzeichnet, dass** bei Ankopplung des Spannmittels (60) an den Mitnehmer eine Fluidübertragung an das Spannmittel (60) durch den Mitnehmerzapfen (26) erfolgen kann.

6. Spannmittel (60) nach Anspruch 5, **dadurch gekennzeichnet, dass** die Ausnehmung (68) mit mindestens einer Abblasöffnung (70) strömungsverbunden ist, die an einer in Verschieberichtung (72) des Spannmittels (60) orientierten Stirnseite (74, 76) des Spannmittels (60) angeordnet ist.

7. Spannmittel (60) nach Anspruch 5 oder 6, **dadurch gekennzeichnet, dass** die Ausnehmung (68) mit mindestens einem Auslass (84) strömungsverbunden ist, der an der Unterseite (64) des Basisabschnitts (62) angeordnet ist und in einen (kammerartigen) Abschnitt (86) mündet, der durch Dichtungen (88, 90) begrenzt ist.

8. Spannmittel (60) nach einem der Ansprüche 5 bis 7, **dadurch gekennzeichnet, dass** der Basisabschnitt (62) eine ferromagnetische Einlage (94) aufweist.

9. Spannmittel (60) nach einem der Ansprüche 5 bis 8, **dadurch gekennzeichnet, dass** das Spannmittel (60) als Blocksauger (60) oder als Vertikalspanner mit einem Spannzylinder ausgebildet ist.

10. Spannmittel (60) nach Anspruch 9, **dadurch gekennzeichnet, dass** bei einem als Vertikalspanner ausgebildeten Spannmittel (60) die Ausnehmung (68) mit der Fluidversorgung des Spannzylinders strömungsverbunden ist.

11. Unterdruckspanneinrichtung (100) zum Spannen von Gegenständen, mit mindestens einer Konsole (10) nach einem der Ansprüche 1 bis 4 und mindestens einem Spannmittel (60) nach einem der Ansprüche 5 bis 10.

## Claims

1. A console (10) for a vacuum clamping apparatus (100), wherein the console (10) has a driven follower (20) for displacing a clamping means (60) which can be placed on the console (10), wherein the follower (20) is arranged on a side wall (18) of the console (10) and is displaceably guided along the longitudinal direction (12) of the console, wherein the follower (20) has at least one extendable follower pin (26) for mechanically coupling a clamping means (60) to the follower (20), **characterized in that** the follower (20) has a fluid supply (28) for applying a fluid, in particular a pressurized fluid, to a clamping means (60) coupled to the follower (20), the fluid supply (28) being integrated in the follower pin (26).

2. The console (10) according to claim 1, **characterized in that** the follower pin (26) has an expansion seal (52) at its free end (40).

3. The console (10) according to claim 2, **characterized in that** the expansion seal (52) is formed to bridge a preferably radial gap of 0.2 mm to 6 mm.

4. The console (10) according to any of the preceding claims, **characterized in that** the follower (20) has a magnetic sensor (58).

5. A clamping means (60) for a console (10) according to any of claims 1 - 4 for a vacuum clamping apparatus (100) for clamping objects by means of pressure, wherein the clamping means (60) has a base portion (62), via the underside (64) of which the clamping means (60) can be placed and displaced on a console (10) of a vacuum clamping apparatus (100), wherein at least one recess (68) is formed on the base portion (62) for coupling to a follower pin (26) of a follower(20) of a console (10) for a vacuum clamping apparatus (100), **characterized in that** when the clamping means (60) is coupled to the follower, fluid can be transferred to the clamping means (60) through the follower pin (26).

6. The clamping means (60) according to claim 5, **characterized in that** the recess (68) is flow-connected to at least one discharge opening (70), which is arranged on an end face (74, 76) of the clamping means (60) oriented in the displacement direction (72) of the clamping means (60).

7. The clamping means (60) according to claim 5 or 6, **characterized in that** the recess (68) is fluidically connected to at least one outlet (84) arranged on the underside (64) of the base portion (62) and opening into a (chamber-like) portion (86) delimited by seals (88, 90).

8. The clamping means (60) according to any of claims 5 to 7, **characterized in that** the base portion (62) has a ferromagnetic insert (94).

9. The clamping means (60) according to any of claims 5 to 8, **characterized in that** the clamping means (60) is designed as a block sucker (60) or as a vertical clamp with a clamping cylinder.

10. The clamping means (60) according to claim 9, **characterized in that** in the case of a clamping means (60) designed as a vertical clamp, the recess (68) is fluidically connected to the fluid supply of the clamping cylinder.

11. A vacuum clamping apparatus (100) for clamping objects, comprising at least one bracket (10) according to any of claims 1 to 4 and at least one clamping means (60) according to any of claims 5 to 10.

## Revendications

1. Console (10) pour un dispositif de serrage par dépression (100), dans laquelle la console (10) présente un entraîneur entraîné (20) pour déplacer un moyen de serrage (60) qui peut être placé sur la console (10), dans laquelle ledit entraîneur (20) est disposé sur une paroi latérale (18) de la console (10) et est guidé de manière déplaçable le long de la direction longitudinale (12) de la console, dans laquelle l'entraîneur (20) présente au moins un tenon d'entraîneur (26) apte à être sorti et destiné à coupler mécaniquement un moyen de serrage (60) à l'entraîneur (20), **caractérisée par le fait que** l'entraîneur (20) comprend une alimentation en fluide (28) destinée à alimenter un moyen de serrage (60) couplé à l'entraîneur (20) en un fluide, en particulier sous pression, dans laquelle ladite alimentation en fluide (28) est intégrée au tenon d'entraîneur (26).

2. Console (10) selon la revendication 1, **caractérisée par le fait que** le tenon d'entraîneur (26) comprend un joint d'étanchéité à expansion (52) à son extrémité libre (40).

3. Console (10) selon la revendication 2, **caractérisée par le fait que** le joint d'étanchéité à expansion (52) est conçu de manière à combler une fente de préférence radiale comprise entre 0,2 mm et 6 mm.

4. Console (10) selon l'une quelconque des revendications précédentes, **caractérisée par le fait que** ledit entraîneur (20) comprend un capteur magnétique (58).

5. Moyen de serrage (60) pour une console (10) selon l'une quelconque des revendications 1 à 4 pour un dispositif de serrage par dépression (100) destiné à serrer des objets au moyen de pression, dans lequel le moyen de serrage (60) présente une section de base (62) par l'intermédiaire de la face inférieure (64) de laquelle le moyen de serrage (60) peut être placé sur une console (10) d'un dispositif de serrage par dépression (100) et être déplacé, dans lequel au moins un évidement (68) est réalisé sur la section de base (62) pour le couplage à un tenon d'entraîneur (26) d'un entraîneur (20) d'une console (10) pour un dispositif de serrage par dépression (100), **caractérisé par le fait que**, lorsque le moyen de serrage (60) est couplé à l'entraîneur, une transmission de fluide au moyen de serrage (60) peut se faire à travers le tenon d'entraîneur (26).

6. Moyen de serrage (60) selon la revendication 5, **caractérisé par le fait que** l'évidement (68) est en communication fluidique avec au moins une ouverture de soufflage (70) qui est agencée sur une face frontale (74, 76) du moyen de serrage (60) laquelle est orientée dans la direction de déplacement (72) du moyen de serrage (60).

7. Moyen de serrage (60) selon la revendication 5 ou 6, **caractérisé par le fait que** l'évidement (68) est en communication fluidique avec au moins une sortie (84) qui est agencée sur la face inférieure (64) de la section de base (62) et débouche dans une section (de type chambre) (86) qui est délimitée par des joints d'étanchéité (88, 90).

8. Moyen de serrage (60) selon l'une quelconque des revendications 5 à 7, **caractérisé par le fait que** la section de base (62) comprend un insert ferromagnétique (94) .

9. Moyen de serrage (60) selon l'une quelconque des revendications 5 à 8, **caractérisé par le fait que** le moyen de serrage (60) est réalisé sous la forme d'une ventouse bloc (60) ou sous la forme d'un dispositif de serrage vertical comprenant un vérin de serrage.

10. Moyen de serrage (60) selon la revendication 9, **caractérisé par le fait que**, dans le cas d'un moyen de serrage (60) réalisé sous la forme d'un dispositif de serrage vertical, ledit évidement (68) est en communication fluidique avec l'alimentation en fluide du vérin de serrage.

11. Dispositif de serrage par dépression (100) destiné à serrer des objets, comprenant au moins une console (10) selon l'une quelconque des revendications 1 à 4 et au moins un moyen de serrage (60) selon l'une quelconque des revendications 5 à 10.
